# EUROPEAN PATENT SPECIFICATION

(11) **EP 0 448 226 B1**
(45) Date of publication and mention of the grant of the patent: **27.12.1995**
(21) Application number: 91301319.9
(22) Date of filing: 20.02.1991
(51) Int. Cl.: H04N 1/41

(54) **Encoding image data**
Verfahren zur Kodierung von Bilddaten
Procédé à coder des données d'image

(30) Priority: 17.03.1990 GB 9006080
(43) Date of publication of application: 25.09.1991
(73) Proprietor: INTERNATIONAL COMPUTERS LIMITED, Putney, London, SW15 1SW (GB)
(72) Inventor: Ireton, Mark Arnold, Baguley, Manchester M23 9WQ (GB); Xydeas, Costas Spyros, Wilmslow, Cheshire SK9 1DF (GB)
(74) Representative: Guyatt, Derek Charles

(56) References cited:
- EP-A- 0 220 706
- EP-A- 0 376 679
- GB-A- 2 199 460
- US-A- 4 979 049

## Description

### Background to the invention

This invention relates to a method and apparatus for encoding image data. The invention is particularly concerned with an encoding technique for image compression, for reducing the amount of memory required to store the image data, or the time required to transmit the data.

One method of compressing image data is described by C. Chamzas and D.L. Duttweiler, "Progressive encoding of facsimile images using edge decomposition (PED)", Proc. GLOBECOM 1988 pages 1011-1015, 1988. In this method, a high resolution image is converted into a low resolution image, such that each pixel (picture element) of the low resolution image corresponds to a group of the pixels in the original image (this group being referred to as a superpixel). At the same time, a supplementary file is produced, containing the information required to reconstruct the high resolution image from the low resolution image.

A characteristic of this compression technique is that it can be applied repeatedly to the image data, so as to produce progressively higher levels of compression. In other words, the compression technique is applied first to the original image data, to produce a low resolution image; the compression is then applied to this low resolution image to produce a still lower resolution image; and so on until the desired degree of compression is achieved. Decoding is achieved by reversing the process.

This progressive encoding characteristic has the advantage that, when a user requires to view the image, it is not necessary for the image to be fully decompressed before it can be viewed. The stored low resolution image can be displayed immediately, with progressively higher resolution images being displayed as the decoding proceeds, until either the maximum resolution for the display is achieved, or else the user decides that the image is not required.

The method described in the above-mentioned paper for producing a low resolution image from a high resolution image is as follows.

For each pixel S in the low resolution image, two adjacent pixel A and P are examined. If A = P, it is predicted that S will be the same colour (black or white) as both A and P. The corresponding superpixel in the high resolution image is then examined to determine whether this prediction is correct. If the predication is correct, i.e. all the pixels in the superpixel are of the predicted colour) then S is set to the predicted colour. If the prediction is not correct, S is set to the opposite colour, and the actual bit pattern of the superpixel corresponding to S is scored in the supplementary file

If, on the other hand, A is not equal to P, no prediction is made for S, and the actual bit pattern of the corresponding superpixel is stored in the supplementary file. S may be set to either colour in this case.

Reconstruction of the original high-resolution image can be achieved simply by reversing the above procedure.

It has been found that a problem with the above compression technique is that it tends to lead to instability in the compressed image. This can occur if a straight horizontal or vertical edge in the image runs through the middle of a row or column of superpixels, and takes the form of an oscillation between black and white pixels along that edge.

The object of the present invention is to provide a method for encoding image data which improves on the above-mentioned compression technique.

### Summary of the Invention

According to the invention, there is provided a method of binary encoding a first image (2) to produce a second image (21) of lower resolution than the first image, each pixel (P) in the second image corresponding to a superpixel group of pixels (p1-p4) in the first image, the method comprising:
(a) scanning the superpixels of the first image in a fixed scan pattern,
(b) for each superpixel (s1-s4) in the first image, deciding whether to provide a prediction indicating a predicted colour for the corresponding pixel (S) in the second image,
(c) if no prediction is provided in step (b), setting the colour of said corresponding pixel (S) in the second image to a colour based on the colours of the pixels (s1-s4) in the superpixel, and storing the actual pixel pattern (s1-s4) of the superpixel in a supplementary file,
(d) if a prediction is provided in step (b), comparing the prediction with the actual pixel pattern (s1-s4) of the superpixel,
(e) if the prediction matches the actual pattern, setting the corresponding pixel (S) in the second image to the predicted colour, and
(f) if the prediction does not match the actual pattern, setting the corresponding pixel (S) in the second image to the inverse of the predicted colour and storing the actual pattern (s1-s4) in the supplementary file,

characterised in that step (b) above comprises forming a prediction class value based on the values of a plurality of previous pixels (a1-a4, p1-p4) in the first image and using said prediction class value to address a table, so as to read out a prediction code from the table, which code indicates the predicted colour or indicates that no prediction is provided.

A decoding method as claimed in claim 6 is also provided.

### Brief Description of the Drawings

Figure 1 is an overall block diagram of an image storage and retrieval system embodying the present invention.

Figure 2 shows parts of a high-resolution image, to illustrate the notation used in describing the image encoding method.

Figure 3 is a flow chart of the image encoding method.

Figure 4 is a flow chart of the corresponding image decoding method.

### Description of an embodiment of the invention

One image data encoding method and apparatus will now be described by way of example with reference to the accompanying drawings.

### Overview of system

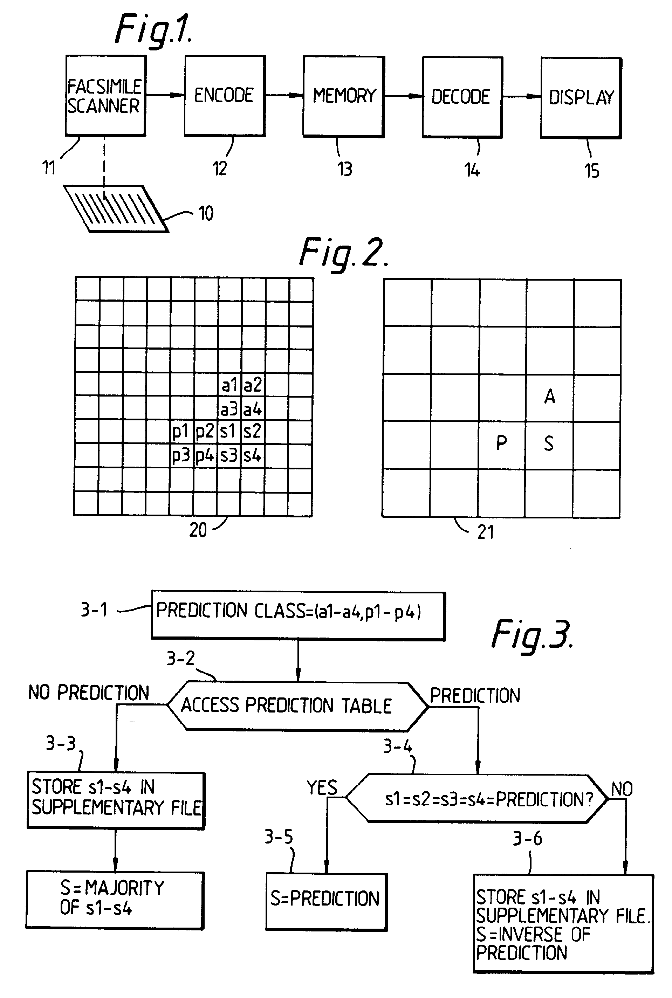

Referring to Figure 1, this shows an overall view of the apparatus.

A document 10 is digitised by a conventional facsimile scanner 11 to produce a digitised image consisting of an array of pixels. Each pixel has the value 0 (White) or 1 (black).

The digitised image data is encoded by means of an encoder 12, so as to compress it, and the encoded data is stored in a memory 13.

When it is desired to view the image, the encoded image data is read out of the memory 13, and decompressed by a decoder 14. The decoded image is then displayed on a display unit 15.

The encoding process consists of taking an original high resolution image, and converting it into a corresponding low-resolution image. At the same time, a supplementary file is produced, containing the information required to reconstruct the high-resolution image from the low-resolution image.

Referring to Figure 2, this illustrates the notation used in the following description of the encoding and decoding processes.

The high resolution image 20 comprises an array of pixels. These are grouped into 2 x 2 sub-arrays, referred to as superpixels. For example, the four pixels, s1 - s4 form one superpixel.

The low-resolution image 21 also comprises an array of pixels, each of which corresponds to one of the superpixels in the high-resolution image. For example, pixel S corresponds to superpixel s1 - s4.

During encoding and decoding, the images are scanned in a raster format. The low-resolution pixel currently being scanned is referred to as pixel S, the pixel above this as pixel A, and the preceding pixel (i.e. that to the left of S) as pixel P.

### Encoding

The procedure for encoding a high-resolution image to form a low-resolution image will now be described. The images are scanned in a raster pattern, so as to process each superpixel s1 - s4 in the high-resolution image in turn, and to assign a colour to the corresponding pixel S in the low-resolution image. Figure 3 shows the processing performed at each step in this scan.
(3-1) First, the two adjacent superpixels a1 - a4 and p1 - p4 are accessed, and are used to form an 8-bit prediction class value. (a1 - a4, p1 - p4). In the case where the superpixel s1 - s4 is on the top or left-hand edge of the image, it is necessary to assume default values for those bits; for example, a default value 0 (white) may be assumed.
(3-2) This prediction class value (a1 - a4, p1 - p4) is then used as an address to access a look-up table held in RAM. The table contains 256 entries, one for each possible prediction class. Each entry contains a code representing one of the following predictions;
   - all-white superpixel (i.e. s1=s2=s3=s4=0)
   - all-black superpixel (i.e. s1=s2=s3=s4=1)
   - no prediction provided
(3-3) If the accessed entry indicates that no prediction is provided then the bit pattern s1 - s4 is stored in the supplementary file. The value of the corresponding pixel S in the low-resolution image is set to white if more than half of s1 - s4 are white, and is otherwise set to black. In other words S is given the majority value of the pixels s1 - s4, with a slight bias to black. This is found to be perceptually preferable.
(3-4) If the accessed table entry indicates that a prediction has been provided, then the actual values of the pixels s1 - s4 are examined to determine whether they match the prediction.
(3-5) If the prediction is correct (i.e. s1=s2=s3=s4 = predicted value), then the pixel S in the low-resolution image is set to the predicted value.
(3-6) Alternatively, if the prediction is incorrect, the pixel S is set to the inverse of the predicted value, and the bit pattern s1 - s4 is stored in the supplementary file.

The above steps are repeated for each pixel in the low-resolution image, until all the pixels in this image have been assigned values.

The whole procedure can then be repeated on the low-resolution image, to form an even lower resolution image, and so on until the desired degree of compression is achieved, or until further repetitions produce no significant increase in compression.

The result of the above procedure is a low-resolution image, and a supplementary file consisting of information required to reconstruct the high-resolution image. Where there has been more than one level of compression, there will be a separate supplementary file for each level.

The low resolution image may be stored simply as a pattern of bits, without any further encoding. The supplementary file is preferably stored in an encoded form, e.g. using a conventional Huffman code, so as to compress it further. Details of this further coding form no part of the present invention and so need not be described in further detail.

The look-up table used in step 3-2 above is constructed as follows.

First, a typical sample set of documents is digitised, to produce a set of training data. Each superpixel s1 - s4 in this training data is then scanned in turn, and its prediction class (a1 - a4, p1 - p4) is determined. A frequency table is constructed, indicating for each of the 256 possible prediction classes the frequency of occurrence of each of the 16 possible bit patterns of the superpixel s1 - s4. This data is then normalised so as to calculate, for each prediction class, the probabilities of an all-white superpixel (s1=s2=s3=s4 = 0) and of an all-black superpixel (s1=s2=s3=s4 = 1). This is done for each prediction class, by dividing the frequency of occurrence of each of these two patterns in that prediction class by the total number of occurrences of that prediction class. If either of these probabilities is greater than a predetermined threshold value (e.g. o.6) then the appropriate prediction is written into the look-up table entry for that prediction class. Otherwise, the look-up table entry is set to indicate that no prediction is possible.

Preferably, a separate look-up table is compiled for each level of the multi-level encoding procedure. This is done by encoding the training data at each level, using the look-up table that has just been compiled for that level, and then analysing the resulting compressed image data to compile the look-up table for the next level. A different threshold probability may be used for each level so as to optimise the encoding.

### Decoding

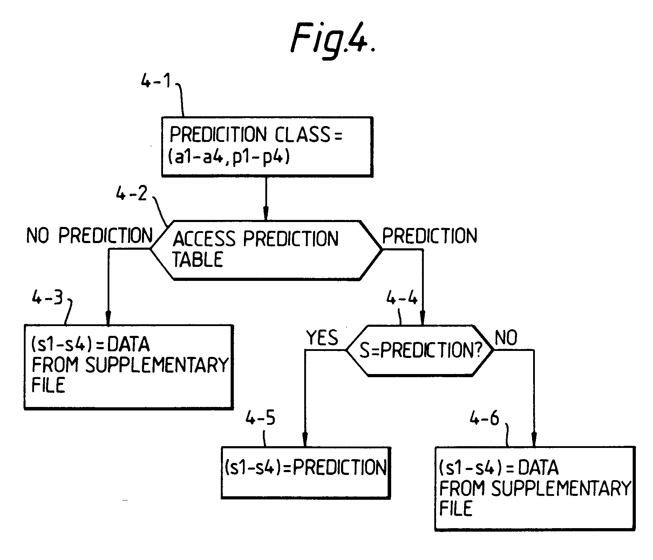

The procedure for reconstructing a high-resolution image from a low-resolution image and its associated supplementary file data will now be described with reference to Figure 4. The procedure shown is performed for each pixel S in turn in the low-resolution image, and calculates the bit pattern s1 - s4 for the corresponding superpixel in the high-resolution image.
(4-1) The prediction class for S is derived from the bit pattern a1 - a4, p1 - p4 in the two adjacent superpixels. If S is on the top or left-hand edge of the image, default values are assumed for these bits. It should be noted that, when S is being processed, the pixels A and P will already have been processed (since they occur before S in the raster scan pattern) and hence the bit patterns for the corresponding superpixels will already have been calculated, or given default values.
(4-2) The prediction class is then used to access the look-up table, to obtain the prediction for this pixel S.
(4-3) If the table indicates that no prediction is provided, then data is read out of the supplementary file and used to reconstruct the superpixel s1 - s4 in the high-resolution image.
(4-4) If, on the other hand, the table indicates a prediction is provided, the prediction is compared with the actual value of S.
(4-5) If the prediction matches the actual value of S, the corresponding superpixel s1 - s4 in the high-resolution image is set to all-black or all-white, according to the prediction.
(4-6) If the prediction does not match the actual value of S, data is read out of the supplementary file and used to reconstruct the superpixel s1 - s4 in the high-resolution image.

The above steps are repeated for each pixel in the low-resolution image so that all the superpixels in the high-resolution image are reconstructed.

The whole procedure can be repeated, to reconstruct an even higher-level image and so on, until either the highest level image is produced, or else the user decides to terminate the process.

### Conclusion

It will be appreciated that many modifications can be made to the method described above without departing from the scope of the present invention.

For example, although in the encoding method described above the prediction class value is based on the pixels a1-a4, p1-p4 in the "above" and "preceding" superpixels, in other embodiments of the invention a different set of pixels may be used to form the prediction class value.

## Claims

1. A method of binary encoding a first image (2) to produce a second image (21) of lower resolution than the first image, each pixel (P) in the second image corresponding to a superpixel group of pixels (p1-p4) in the first image, the method comprising:
(a) scanning the superpixels of the first image in a fixed scan pattern,
(b) for each superpixel (s1-s4) in the first image, deciding whether to provide a prediction indicating a predicted colour for the corresponding pixel (S) in the second image,
(c) if no prediction is provided in step (b), setting the colour of said corresponding pixel (S) in the second image to a colour based on the colours of the pixels (s1-s4) in the superpixel, and storing the actual pixel pattern (s1-s4) of the superpixel in a supplementary file,
(d) if a prediction is provided in step (b), comparing the prediction with the actual pixel pattern (s1-s4) of the superpixel,
(e) if the prediction matches the actual pattern, setting the corresponding pixel (S) in the second image to the predicted colour, and
(f) if the prediction does not match the actual pattern, setting the corresponding pixel (S) in the second image to the inverse of the predicted colour and storing the actual pattern (s1-s4) in the supplementary file,
characterised in that step (b) above comprises forming a prediction class value based on the values of a plurality of previous pixels (a1-a4, p1-p4) in the first image and using said prediction class value to address a table, so as to read out a prediction code from the table, which code indicates the predicted colour or indicates that no prediction is provided.

2. A method of encoding an image comprising applying the method of Claim 1 repeatedly so as to form a series of images of progressively lower resolution.

3. A method according to Claim 2, wherein a separate table is used for each repetition.

4. A method according to any preceding claim wherein said table is formed by performing an analysis on a set of sample images, to determine the most probable prediction for each prediction class value.

5. A method according to Claim 4 wherein a prediction is provided in said table only if the probability of said most probable prediction for a particular prediction class value exceeds a predetermined threshold value.

6. A method of decoding a binary encoded first image (21) to produce a second image (20) of higher resolution than the first image, each pixel (P) in the first image corresponding to a superpixel group of pixels (p1-p4) in the second image, the method comprising:
(a) scanning the pixels of the first image in a fixed scan pattern,
(b) for each pixel (S) in the first image, deciding whether to provide a prediction indicating a predicted colour for the corresponding superpixel (s1-s4) in the second image,
(c) if no prediction is provided in step (b), using data from a supplementary file to set the colours of the pixels (s1-s4) in said superpixel,
(d) if a prediction is provided in step (b), comparing the prediction with actual value of the pixel (S) in the first image,
(e) if the prediction matches the value of said pixel (S), setting each pixel (s1-s4) in the corresponding superpixel in the second image to the predicted colour, and
(f) if the prediction does not match the value of said pixel (S), using data from the supplementary file to set the colours of the pixels (s1-s4) in said superpixel,
characterised in that step (b) above comprises forming a prediction class value based on the values of a plurality of previous pixels (a1-a4, p1-p4) in the second image and using prediction class value to address a table, so as to read out a prediction code from the table, which code indicates the predicted colour or indicates that no prediction is provided.

## Patentansprüche

1. Verfahren zum Binärcodieren eines ersten Bildes (2), um ein zweites Bild (21) geringerer Auflösung als das erste Bild zu erzeugen, wobei jedes Pixel (P) im zweiten Bild einer Superpixelgruppe von Pixeln (p1 - p4) im ersten Bild entspricht, bei dem
a) die Superpixel des ersten Bildes in einem festen Abtastschema abgetastet werden,
b) für jedes Superpixel (s1 - s4) im ersten Bild eine Entscheidung getroffen wird, ob eine Vorhersage vorgenommen wird, die eine vorhergesagte Farbe für das entsprechende Pixel (S) im zweiten Bild anzeigt,
c) wenn keine Vorhersage im Schritt (b) getroffen wird, die Farbe des entsprechenden Pixelx (S) im zweiten Bild auf eine Farbe eingestellt wird, die auf den Farben der Pixel (s1 - s4) im Superpixel basieren, und das tatsächliche Pixelschema (s1 - s4) des Superpixels in einer zusätzlichen Datei gespeichert wird,
d) wenn eine Vorhersage im Schritt (b) getroffen wird, die Vorhersage mit dem tatsächlichen Pixelschema (s1 - s4) des Superpixels verglichen wird,
e) wenn die Vorhersage dem tatsächlichen Schema entspricht, das entsprechende Pixel (S) im zweiten Bild auf die vorhergesagte Farbe eingestellt wird, und
f) wenn die Vorhersage nicht dem tatsächlichen Schema entspricht, das entsprechende Pixel (S) im zweiten Bild auf den inversen Wert der vorhergesagten Farbe eingestellt und das tatsächliche Schema (s1 - s4) in der zusätzlichen Datei gespeichert wird,
**dadurch gekennzeichnet,** daß der vorstehende Schritt (b) die Bildung eines Vorhersageklassenwertes, der auf den Werten einer Vielzahl von vorausgehenden Pixeln (a1 - a4, p 1 - p4) im ersten Bild entspricht, und die Verwendung des Vorhersageklassenwertes zum Adressieren einer Tabelle einschließt, um einen Vorhersagecode aus der Tabelle auszulesen, der die vorhergesagte Farbe anzeigt, oder anzeigt, daß keine Vorhersage vorgenommen worden ist.

2. Verfahren zum Codieren eines Bildes, bei dem das Verfahren nach Anspruch 1 wiederholt so angewandt wird, daß eine Reihe von Bildern mit fortlaufend geringerer Auflösung gebildet wird.

3. Verfahren nach Anspruch 2, bei dem eine getrennte Tabelle für jede Wiederholung verwendet wird.

4. Verfahren nach einem der vorausgehenden Ansprüche, bei dem die Tabelle dadurch gebildet wird, daß eine Analyse an einem Satz von Probenbildern durchgeführt wird, um die wahrscheinlichste Vorhersage für jeden Vorhersageklassenwert zu bestimmen.

5. Verfahren nach Anspruch 4, bei dem eine Vorhersage in der Tabelle nur dann vorgenommen wird, wenn die Wahrscheinlichkeit der wahrscheinlichsten Vorhersage für einen bestimmten Vorhersageklassenwert einen vorbestimmten Schwellwert übersteigt.

6. Verfahren zum Decodieren eines binärcodierten ersten Bildes (21) zur Erzeugung eines zweiten Bildes (20) höherer Auflösung als das erste Bild, wobei jedes Pixel (P) im ersten Bild einer Superpixelgruppe von Pixeln (p1 - p4) im zweiten Bild entspricht, bei dem
a) die Pixel des ersten Bildes in einem festen Abtastschema abgetastet werden,
b) für jedes Pixel (S) im ersten Bild eine Entscheidung getroffen wird, ob eine Vorhersage getroffen wird, die eine vorhergesagte Farbe für das entsprechende Superpixel (s1 - s4) im zweiten Bild anzeigt,
c) wenn keine Vorhersage im Schritt (b) vorgenommen wird, Daten aus einer zusätzlichen Datei verwendet werden, um die Farben der Pixel (s1 - s4) in dem Superpixel einzustellen,
d), wenn eine Vorhersage in Schritt (b) vorgenommen wird, die Vorhersage mit einem tatsächlichen Wert des Pixels (S) im ersten Bild verglichen wird,
e) wenn die Vorhersage mit dem Wert des Pixels (S) übereinstimmt, jedes Pixel (s1 - s4) in dem entsprechenden Superpixel im zweiten Bild auf die vorhergesagte Farbe eingestellt wird, und
f) wenn die Vorhersage mit dem Wert des Pixels (S) nicht übereinstimmt, Daten aus der zusätzlichen Datei verwendet werden, um die Farben der Pixel (s1 - s4) in dem Superpixel zu setzen,
dadurch gekennzeichnet, daß der vorstehende Schritt (b) umfaßt:
das Bilden eines Vorhersageklassenwertes, der auf den Werten einer Vielzahl von vorausgehenden Pixeln (a1 - a4, p1 - p4) im zweiten Bild basiert, und die Verwendung eines Vorhersageklassenwertes, um eine Tabelle zu addressieren, damit ein Vorhersagecode aus der Tabelle ausgelesen wird, der die vorhergesagte Farbe anzeigt oder anzeigt, daß keine Vorhersage vorgenommen worden ist.

## Revendications

1. Procédé de codage en binaire d'une première image (2) pour produire une seconde image (21) de plus faible résolution que la première image, chaque élément d'image (P) de la seconde image correspondant à un groupe super-élément d'image d'éléments d'image (p1-p4) dans la première image, le procédé comprenant:
(a) le balayage des super-éléments d'image de la première image dans un modèle de balayage fixe,
(b) pour chaque super-élément d'image (s1-s4) dans la première image, la décision s'il faut fournir une prévision indiquant une couleur prévue pour l'élément d'image correspondant (S) dans la seconde image,
(c) si aucune prévision n'est fournie dans l'étape (b), l'établissement de la couleur dudit élément d'image correspondant (S) dans la seconde image à une couleur selon les couleurs des éléments d'image (s1-s4) dans le super-élément d'image, et l'enregistrement du présent Modèle d'éléments d'image (s1-s4) du super-élément d'image dans un fichier supplémentaire,
(d) si une prévision est fournie dans l'étape (b), la comparaison de la prévision au présent modèle d'éléments d'image (s1-s4) du super-élément d'image,
(e) si la prévision correspond au présent modèle, l'établissement de l'élément d'image correspondant (S) dans la seconde image à la couleur prévue, et
(f) si la prévision ne correspond pas au présent modèle, l'établissement de l'élément d'image correspondant (S) dans la seconde image à l'inverse de la couleur prévue et l'enregistrement du présent modèle (sl-s4) dans le fichier supplémentaire,
caractérisé en ce que l'étape (b) ci-dessus comprend la formation d'une valeur de classe de prévision selon les valeurs d'une pluralité d'éléments d'image précédents (a1-a4,p1-p4) dans la première image et l'utilisation de ladite valeur de classe de prévision pour adresser une table, de manière à lire un code de prévision dans la table, ce code indiquant la couleur prévue ou indiquant qu'aucune prévision n'est fournie.

2. Procédé de codage d'une image comprenant l'application du procédé de la revendication 1 de façon répétitive de manière à former une série d'images ayant une résolution de plus en plus faible.

3. Procédé selon la revendication 2, dans lequel une table séparée est utilisée pour chaque répétition.

4. Procédé selon l'une quelconque des revendications précédentes, dans lequel ladite table est formée par l'exécution d'une analyse sur un ensemble d'images d'échantillonnage, pour déterminer la prévision la plus probable pour chaque valeur de classe de prévision.

5. Procédé selon la revendication 4, dans lequel une prévision est fournie dans ladite table uniquement si la probabilité de ladite prévision la plus probable pour une valeur de classe de prévision particulière dépasse une valeur de seuil prédéterminée.

6. Procédé de décodage d'une première image codée en binaire (21) pour produire une seconde image (20) de plus haute résolution que la première image, chaque élément d'image (P) dans la première image correspondant à un groupe super-élément d'image d'éléments d'image (p1-p4) dans la seconde image, ce procédé comprenant:
(a) le balayage des éléments d'image de la première image dans un modèle de balayage fixe,
(b) pour chaque élément d'image (S) dans la première image, la décision s'il faut fournir une prévision indiquant une couleur prévue pour le super-élément d'image correspondant (s1-s4) dans la seconde image,
(c) si aucune prévision n'est fournie dans l'étape (b), l'utilisation des données d'un fichier supplémentaire pour établir les couleurs des éléments d'image (s1-s4) dans ledit super-élément d'image,
(d) si une prévision est fournie dans l'étape (b), la comparaison de la prévision à une valeur présente de l'élément d'image (S) dans la première image,
(e) si la prévision correspond à la valeur dudit élément d'image (S), l'établissement de chaque élément d'image (s1-s4) dans le super-élément d'image correspondant dans la seconde image à la couleur prévue, et
(f) si la prévision ne correspond pas à la valeur dudit élément d'image (S), l'utilisation des données du fichier supplémentaire pour établir les couleurs des éléments d'image (s1-s4) dans ledit super-élément d'image,
caractérisé en ce que l'étape (b) ci-dessus comprend la formation d'une valeur de classe de prévision selon les valeurs d'une pluralité d'éléments d'image précédents (a1-a4,p1-p4) dans la seconde image et l'utilisation de la valeur de classe de prévision pour adresser une table, de manière à lire un code de prévision dans la table, ce code indiquant la couleur prévue ou indiquant qu'aucune prévision n'est fournie.
